# DEMANDE DE BREVET EUROPEEN

(11) **EP 4 825 561 A1**
(43) Date de publication de la demande: **21.10.2026**
(21) Numéro de dépôt: 26167475.8
(22) Date de dépôt: 25.03.2026
(51) Int. Cl.: B29C 49/58, B29C 49/28, B29C 49/08, B29C 49/42, B29C 49/46, B29C 49/48, B29C 49/78, B29K 67/00, B29L 31/00

(54) **TUYERE POUR LE FORMAGE DE RECIPIENTS EN MATERIAU THERMOPLASTIQUE**

(30) Priorité: 15.04.2025 FR 2504031
(71) Demandeur: Sidel Participations, 76930 Octeville-sur-Mer (FR)
(72) Inventeur: LEMAIRE, Cédric, 76930 OCTEVILLE-SUR-MER (FR); GIRODIT, Guillaume, 76930 OCTEVILLE-SUR-MER (FR)
(74) Mandataire: Sidel Group

(57) **Abrégé**

L'invention concerne une tuyère (30) pour le formage de récipients en matériau thermoplastique par injection d'un fluide sous pression dans une préforme (12), la tuyère (30) comportant :
- un support (32) qui est muni d'une conduite (34) d'arrivée de fluide sous pression ;
- un embout (38) de tuyère tubulaire distinct du support (32) qui est destiné à être monté sur le support (32) pour prolonger la conduite (34) d'arrivée et qui comporte un joint (40) de soufflage pour le raccordement étanche de son extrémité libre avec une préforme (12) ;
- un organe (42) de fixation pour la fixation amovible de l'embout (38) sur le support (32) ;
caractérisé en ce que l'organe (42) de fixation comporte un collier (44) de serrage.

## Description

### Domaine technique de l'invention

L'invention concerne une tuyère pour le formage de récipients en matériau thermoplastique par injection d'un fluide sous pression dans une préforme, la tuyère comportant :
- un support qui est muni d'une conduite d'arrivée de fluide sous pression ;
- un embout de tuyère tubulaire distinct du support qui est destiné à être monté sur le support pour prolonger la conduite d'arrivée et qui comporte un joint de soufflage pour le raccordement étanche de son extrémité libre avec une préforme ;
- un organe de fixation pour la fixation amovible de l'embout sur le support.

### Arrière-plan technique

Il est connu de réaliser des récipients en matériau thermoplastique, tel que le polyéthylène téréphtalate (PET), par étirage-soufflage de préformes dans une unité de formage.

En général, une préforme présente une forme axisymétrique. La préforme comporte un col qui présente déjà sa forme définitive, tandis qu'un corps de la préforme est destiné à être déformé pendant le procédé de formage. L'axe principal de la préforme passe par le centre du col.

Pour permettre sa déformation, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation.

Afin de réaliser des récipients présentant une paroi d'épaisseur sensiblement constante, il est connu de réaliser un étirage dit "bi-axial" de la matière constituant la paroi de la préforme pour la déformer plastiquement. Le procédé de formage comporte à cet effet une première étape de présoufflage durant laquelle du fluide de formage est injecté à une pression de présoufflage. Durant cette étape de présoufflage, une tige d'étirage coulissante est introduite coaxialement dans le col de la préforme en poussant le fond de la préforme de manière à étirer la paroi du corps dans une direction axiale.

A la fin de cette étape de présoufflage, une étape de soufflage est déclenchée, lors de laquelle un fluide de formage comprimé est injecté à une pression de soufflage, supérieure à la pression de présoufflage, dans le corps de la préforme de manière à permettre un étirage de la matière correctement répartie dans une direction globalement circonférentielle de la paroi du corps.

En général, ce procédé de formage est réalisé dans une cavité de moulage qui comporte une empreinte conforme au récipient final à obtenir. Lors de l'étape de soufflage, la paroi du corps de la préforme est plaquée contre la paroi de l'empreinte sous l'effet de la pression du fluide de formage pour conférer au récipient sa forme définitive.

Lorsqu'elle commence à se déformer, la préforme devient un « récipient intermédiaire » avant d'arriver à sa forme définitive de « récipient final ».

Dans la suite de la description et dans les revendications, on emploiera le terme "corps creux" pour désigner indifféremment une préforme, un récipient intermédiaire ou un récipient fini.

Le col d'une préforme présentant déjà sa forme définitive, il est impératif de préserver l'intégrité du col durant l'opération de formage.

Par ailleurs, les installations de fabrication de récipients en matériau thermoplastique sont conçues de manière à pouvoir fabriquer des récipients de formes et de dimensions variées. Ainsi, une même installation est susceptible de traiter des préformes présentant des cols de formats variés.

Pour réaliser un soufflage efficace, sans perte d'énergie, et sans détériorer le col de chaque corps creux, il est nécessaire de changer certains éléments de la tuyère, couramment appelés "éléments de personnalisation". Ces éléments présentent des dimensions adaptées à chaque format de col. Les éléments de personnalisation de la tuyère sont compris dans un embout de tuyère adapté au format de la préforme à traiter. L'embout de tuyère est monté sur un support qui reste le même pour tous les formats de préformes.

L'embout de tuyère présente généralement la forme d'un boîtier qui est monté sur le support par l'intermédiaire de moyens de fixation.

L'embout de tuyère est généralement fixé par vissage sur le support au moyen de vis d'orientation axiale. Cependant, un tel moyen de fixation ne permet pas de réaliser un changement rapide de l'embout. En outre, il est nécessaire de respecter des couples de serrage pour chaque vis afin de garantir une bonne étanchéité.

On a aussi proposé de fixer l'embout sur le support au moyen de fixation à billes. Cependant, un tel mécanisme de fixation nécessite un usinage très précis des différentes pièces afin de garantir l'absence de jeux qui engendreraient des fuites.

Un tel agencement est donc très complexe et onéreux à fabriquer.

### Résumé de l'invention

L'invention propose une tuyère pour le formage de récipients en matériau thermoplastique par injection d'un fluide sous pression dans une préforme, la tuyère comportant :
- un support qui est muni d'une conduite d'arrivée de fluide sous pression ;
- un embout de tuyère tubulaire distinct du support qui est destiné à être monté sur le support pour prolonger la conduite d'arrivée et qui comporte un joint de soufflage pour le raccordement étanche de son extrémité libre avec une préforme ;
- un organe de fixation pour la fixation amovible de l'embout sur le support ;
   caractérisé en ce que l'organe de fixation comporte un collier de serrage.

Selon d'autres caractéristiques de la tuyère réalisée selon les enseignements de l'invention :
- l'embout de tuyère comporte un premier collet annulaire et le support comporte un deuxième collet annulaire dont une face d'appui est destinée à venir axialement en butée contre une face d'appui en vis-à-vis du premier collet annulaire lorsque l'embout de tuyère est monté sur le support, le collier de serrage enserrant des bords des deux collets ;
- le collier de serrage comporte une gorge interne de réception des collets assemblés ;
- chaque collet comporte une face de portée opposée à sa face d'appui, la face de portée présentant une forme tronconique coopérant avec une paroi latérale inclinée de la gorge pour comprimer axialement les deux faces d'appui l'une contre l'autre lorsque le collier est serré radialement autour des collets ;
- un joint de réaction annulaire élastique est interposé entre les deux faces d'appui ;
- le joint de réaction est reçu dans une rainure annulaire d'au moins l'une des deux faces d'appui ;
- le support présente un manchon de centrage qui s'étend axialement en saillie depuis la face d'appui du deuxième collet, le manchon de centrage étant emboîté axialement dans un passage central de l'embout lors du montage ;
- une extrémité libre du manchon de centrage est reçue en butée axiale contre un épaulement interne de l'embout ;
- un joint annulaire d'étanchéité est intercalé entre l'épaulement et l'extrémité libre du manchon lorsque l'embout est monté sur le support ;
- le collier de serrage comporte au moins deux mors serrés l'un contre l'autre par au moins un organe de fermeture ;
- les mors sont articulés l'un à l'autre par une charnière agencée à une première extrémité des mors, l'organe de fermeture étant agencé à l'autre extrémité des mors ;
- l'au moins un organe de fermeture comporte une tige de traction qui est reçue dans des orifices aux extrémités libres des mors pour tirer les mors l'un vers l'autre ;
- l'organe de fixation comporte un levier à came qui tire la tige lorsqu'il est rabattu contre le mors ;

L'invention concerne aussi un embout de tuyère présentant un axe principal pour une tuyère réalisée selon les enseignements de l'invention, caractérisé en ce qu'il comporte :
- un joint de soufflage pour le raccordement étanche de son extrémité libre avec une préforme ;
- un premier collet annulaire agencé à une extrémité supérieure de l'embout et présentant une face d'appui et une face de portée opposée, la face de portée présentant une forme tronconique, tandis que la face d'appui est orthogonale à l'axe.

L'invention concerne aussi un support de tuyère présentant un axe principal pour une tuyère réalisée selon les enseignements de l'invention, caractérisé en ce qu'il comporte :
- un deuxième collet annulaire présentant une face d'appui et une face de portée opposée, la face de portée présentant une forme tronconique, tandis que la face d'appui est orthogonale à l'axe ;
- un manchon de centrage qui s'étend axialement en saillie depuis la face d'appui du deuxième collet.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la [Fig.1] est une vue en coupe axiale qui représente schématiquement un poste de formage muni d'une tuyère ;
- la [Fig.2] est une vue en perspective qui représente une tuyère réalisée selon les enseignements de l'invention équipant le poste de la [Fig.1] comportant un embout et un support, l'embout étant détaché de son support ;
- la [Fig.3] est une vue en coupe axiale de la [Fig.2] ;
- la [Fig.4] est une vue en perspective qui représente l'embout de la [Fig.2] qui a été positionné sur son support ;
- la [Fig.5] est une vue en coupe axiale de la [Fig.4] ;
- la [Fig.6] est une vue en perspective qui représente l'embout de la [Fig.4] fixé sur son support au moyen d'un collier de serrage ;
- la [Fig.7] est une vue en coupe axiale de la [Fig.6] ;
- la [Fig.8] est une vue du collier de serrage de la [Fig.6] en perspective avec coupe axiale ;
- la [Fig.9] est une vue en perspective du collier de serrage de la [Fig.6] en position fermée ;
- la [Fig.10] est une vue similaire à celle de la [Fig.9] sous un autre angle de vue ;
- la [Fig.11] est une vue en perspective qui représente le collier de serrage de la [Fig.6] avec un levier à came en position ouverte.

### Description détaillée de l'invention

Dans la suite de la description, des éléments présentant une structure identique ou des fonctions analogues seront désignés par une même référence.

Dans la suite de la description, on adoptera à titre non limitatif une orientation axiale parallèle à un axe "Z0" d'une tuyère 30 et dirigée de bas en haut selon la flèche "A" des figures. Dans les exemples représentés aux figures, la direction axiale correspond, de manière non limitative, avec la direction de la gravité.

On définit aussi des directions radiales orthogonale à l'axe « Z0 » de la tuyère et dirigées depuis l'axe « Z0 » de la tuyère 30 vers l'extérieur.

On définit aussi des directions tangentielles dont chacune est orthogonale à la direction axiale et à une direction radiale associée.

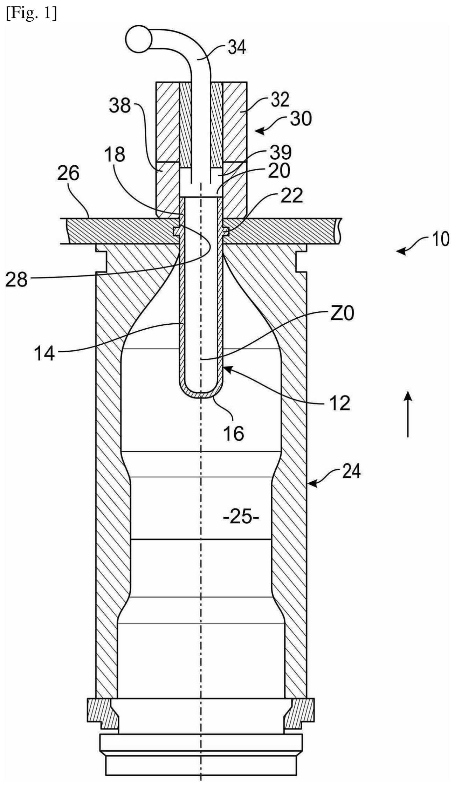

On a représenté à la [Fig.1] un poste 10 de formage d'un récipient par étirage-soufflage ou soufflage d'une préforme 12.

Un tel poste 10 de formage est par exemple monté sur un carrousel rotatif d'une unité de formage (non représentée). L'unité de formage fait partie d'une installation (non représentée) de fabrication de récipients. L'installation comporte par exemple une unité de conditionnement thermique agencée en amont de l'unité de formage selon le sens de déplacement des préformes.

Comme représenté à la [Fig.1], la préforme 12 présente une forme sensiblement axisymétrique autour d'un axe "Z0" principal d'orientation verticale. Elle comporte un corps 14 cylindrique à paroi tubulaire fermé à son extrémité inférieure par un fond 16, et qui est prolongé à son extrémité supérieure par un col 18 ouvert axialement vers le haut, lui aussi tubulaire. Le col 18 est délimité vers le haut par un bord circulaire d'extrémité supérieur qui sera appelé par la suite "buvant 20". Le col 18 de la préforme 12 comporte aussi une collerette 22 annulaire qui fait saillie radialement. La collerette 22 est ici agencée à la jonction entre la base du col 18 et le corps 14.

Une telle préforme 12 est réalisée en matériau thermoplastique, ici en polyéthylène téréphtalate (PET). Elle est classiquement obtenue par moulage par injection.

Le col 18 est généralement injecté de manière à posséder déjà sa forme définitive tandis que le corps 14 de la préforme 12 est destiné à subir une déformation relativement importante pour former le récipient final lors d'une étape ultérieure de formage.

A cet effet, avant d'être reçue dans le poste 10 de soufflage, le corps 14 de la préforme 12 est chauffé, par exemple dans une unité de conditionnement thermique, au-delà d'une température de transition vitreuse de manière à rendre ses parois malléables, tandis que le col 18 est maintenu sensiblement plus froid que la température de transition vitreuse.

Le poste 10 de formage comporte un moule 24 présentant une cavité 25 de moulage. Le corps 14 de la préforme 12 ainsi chauffé est reçu dans la cavité 25 de moulage. Le moule 24 comporte une face 26 horizontale supérieure. Le moule 24 comporte dans sa face 26 supérieure un orifice 28 de passage du col 18. La collerette 22 repose sur la face 26 supérieure du moule 24 de manière que le col 18 s'étende en saillie verticalement au-dessus de la face 26 supérieure du moule 24.

Le moule 24 est généralement réalisé en deux demi-moules assemblés selon un plan de joint vertical passant par l'orifice de passage du col 18. Cette configuration permet d'éjecter le récipient final par écartement des deux demi-moules à l'issue de l'opération de formage.

Le poste 10 de formage comporte aussi une tuyère 30 pour le formage de récipients en matériau thermoplastique par injection d'un fluide sous pression dans une préforme 12.

Le fluide de formage est ici un gaz, par exemple de l'air comprimé à 40 bars.

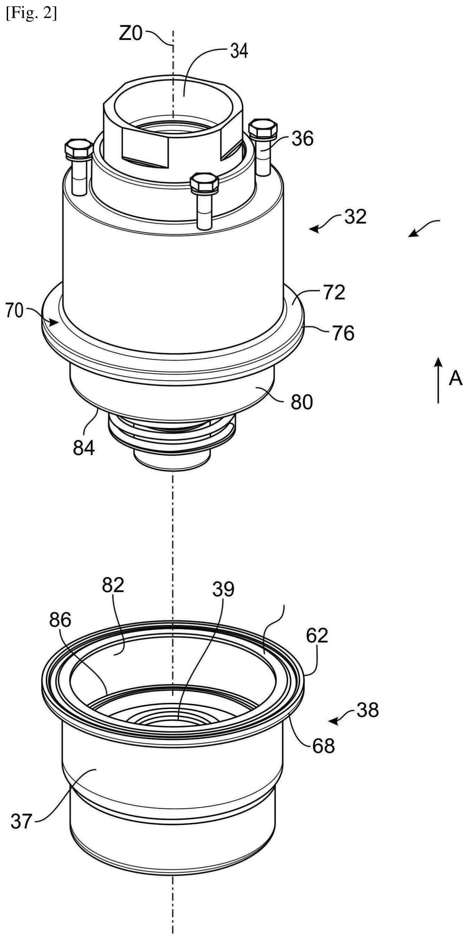

La tuyère 30 est représentée de manière très schématique à la [Fig.1]. Pour la suite de la description on se reportera aux figures 2 à 7 qui représentent la tuyère 30 de manière plus détaillée.

La tuyère 30 comporte un support 32. Le support 32 comporte un corps 33 globalement tubulaire d'axe « Z0 ». Le support 32 est muni d'une conduite 34 d'arrivée de fluide sous pression qui traverse le corps 33 axialement.

Le support 32 est destiné à être fixé à demeure sur un chariot (non représenté) coulissant selon une direction axiale par rapport au moule 24. Le support 32 est destiné à rester le même quel que soit les dimensions des préformes 12 traitées. Le support 32 est par exemple fixé solidement par l'intermédiaire de vis 36. Bien que le support 32 puisse être démonté pour sa maintenance, cette opération n'est pas destinée à être réalisée souvent et elle requiert beaucoup de temps et des outils. Il est notamment nécessaire de visser les vis 36 dans un certain ordre avec un couple déterminé pour garantir une bonne étanchéité de la tuyère, notamment eu égard à la pression très élevée du fluide de soufflage qui peut atteindre environ 40 bars.

La tuyère 30 comporte aussi un embout 38 de tuyère tubulaire distinct du support 32. L'embout 38 de tuyère est destiné à être monté sur le support 32. L'embout 38 de tuyère comporte un corps 37 qui présente une forme tubulaire d'axe « Z0 » qui s'étend depuis une extrémité supérieure de raccordement avec le support 32 et une extrémité inférieure libre. Un orifice 39 central de l'embout 38 traverse axialement le corps 37. Ainsi, l'orifice 39 central prolonge axialement la conduite 34 d'arrivée lorsqu'il est monté sur le support 32.

L'embout 38 de tuyère comporte un joint 40 de soufflage pour raccordement étanche de son extrémité libre avec une préforme 12.

Le joint 40 de soufflage forme un élément dit « élément de personnalisation » qui doit être adapté aux dimensions de la préforme 12 présente dans le moule 24, notamment au diamètre du col 18.

L'embout 38 est destiné à être remplacé assez fréquemment à chaque fois qu'un nouveau lot de préformes 12 présentant des dimensions différentes du lot précédent est traité par l'installation. Cela permet notamment d'adapter les dimensions de l'embout 38 lui-même ainsi que les dimensions des éléments de personnalisation, notamment le joint 40 de soufflage, aux dimensions des nouvelles préformes 12.

A titre d'exemple non limitatif, il s'agit ici d'une tuyère 30 dite « tuyère cloche » dans laquelle le joint 40 de soufflage est agencé à l'extrémité inférieure libre de l'embout 38 pour venir en contact avec la face 26 supérieur du moule lorsque la tuyère 30 occupe une position active de soufflage. Ainsi, la partie du col 18 de la préforme 12 faisant saillie est reçue dans l'orifice 39 central.

En variante non représentée de l'invention, le joint 40 de soufflage est agencé de manière à être en contact étanche directement avec une partie de la préforme 12, par exemple le buvant 20 ou la collerette 22.

A titre d'exemple non limitatif, l'embout 38 peut aussi comporter d'autres éléments de personnalisation, outre le joint 40 de soufflage. Par exemple, l'embout 38 comporte ici un stabilisateur 43 qui est destiné à venir appuyer sur le buvant 20 de la préforme 12 pour éviter que la préforme 12 ne bouge dans le moule 24. Le stabilisateur 43 est un élément tubulaire qui est contraint élastiquement en direction de la préforme 12 par un organe 45 élastique, ici un ressort. L'organe 45 élastique est de préférence agencé à demeure dans le support 32 car il n'est pas nécessaire de le changer à chaque changement de format.

La tuyère 30 comporte aussi un organe 42 de fixation pour la fixation amovible de l'embout 38 sur le support 32.

Il s'agit d'un organe 42 de fixation rapide qui permet de démonter l'embout 38 pour le remplacer rapidement par un autre.

Par « fixation rapide », on comprendra qu'il s'agit d'un organe 42 de fixation qui permet une fixation beaucoup plus rapide qu'avec des vis qui nécessitent, comme expliqué précédemment, de suivre des directives de serrage très strictes.

Selon les enseignements de l'invention, l'organe 42 de fixation comporte un collier 44 de serrage. Il s'agit plus particulièrement d'un collier 44 qui est serré radialement.

Le collier 44 de serrage comporte au moins deux mors, ici deux mors 44A, 44B, et au moins un organe 46 de fermeture des mors 44A, 44B en position serrée l'un contre l'autre.

Chaque mors 44A, 44B présente ici la forme d'un demi-anneau.

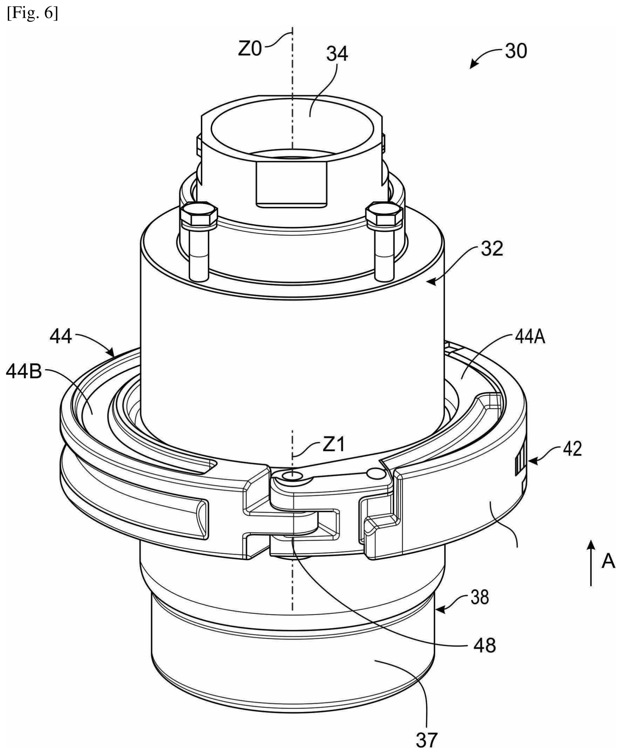

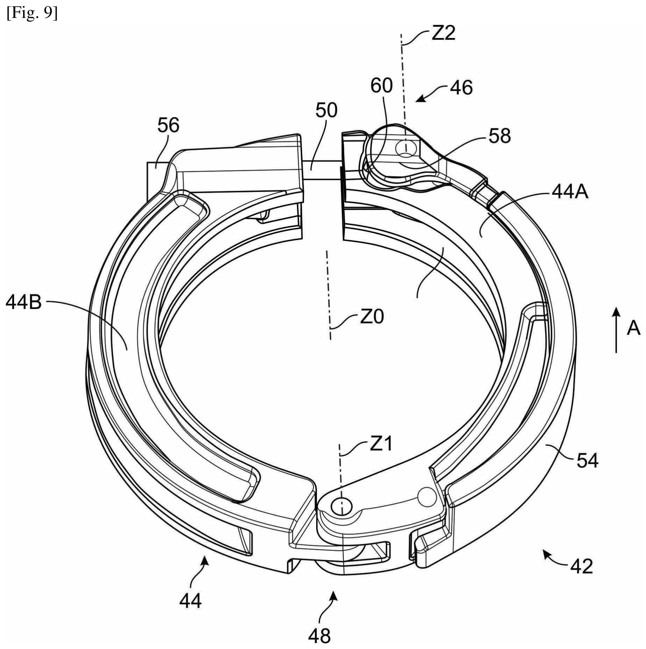

Comme représenté aux figures 6 à 10, l'organe 42 de fixation est, à titre d'exemple non limitatif, ici un collier de serrage dit « tri-clamp ». A cet effet, les deux mors 44A, 44B sont montés articulés l'un à l'autre autour d'un axe « Z1 » d'orientation axiale par l'intermédiaire d'une charnière 48 agencée à une première extrémité des mors 44A, 44B.

L'organe 46 de fermeture comporte une tige 50 de traction qui est reçue dans des orifices 52 à la deuxième extrémité libre des mors 44A, 44B pour tirer les mors 44A, 44B l'un vers l'autre. Par exemple, une première extrémité de la tige 50 de traction est retenue par un écrou 56 dans l'orifice 52 associé d'un des mors 44B.

Pour permettre un actionnement rapide de l'organe 46 de fermeture, celui-ci comporte un levier 54 à came. Une extrémité d'articulation du levier 54 à came est montée pivotante sur une deuxième extrémité de la tige 50 de traction autour d'un axe « Z2 » de pivotement d'orientation axiale. Le levier 54 à came comporte, à son extrémité d'articulation, une came 58 excentrique par rapport à l'axe « Z2 » de pivotement. L'axe « Z2 » de pivotement du levier 54 à came est reçu dans une lumière oblongue (non représentée) du mors 44A. Le levier 54 à came est ainsi monté pivotant autour de l'axe « Z2 » de pivotement et coulissant dans un sens circonférentiel par apport au mors 44A associé. Le mors 44A associé comporte une cuvette 60 de came, servant de support fixe contre lequel la came 58 du levier 54 à came agit lors de la fermeture.

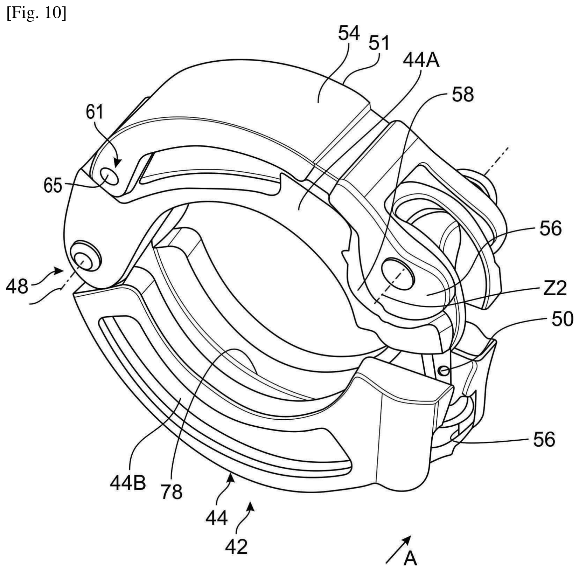

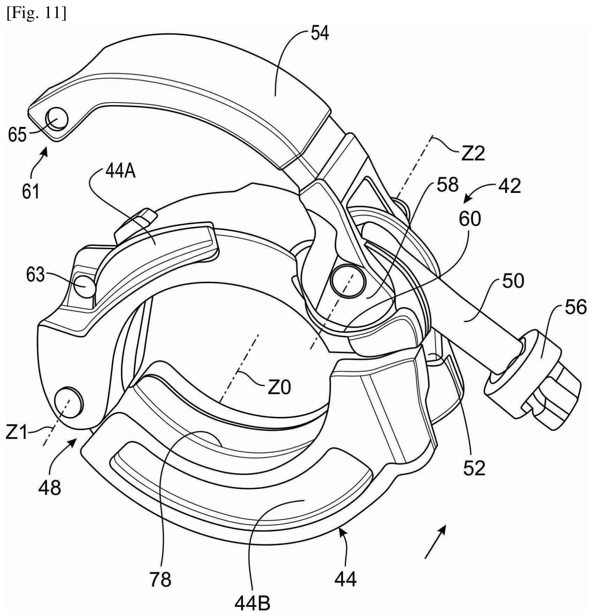

Dans une position ouverte du levier 54 à came, représentée à la [Fig.11], la came 58 est dans une orientation où elle n'exerce aucune pression sur la cuvette 60, laissant les mors 44A, 44B desserrés. En basculant le levier 54 à came vers une position fermée, représentée à la [Fig.10], la came 58 tourne et exerce une pression croissante sur la cuvette 60, resserrant les mors 44A, 44B l'un contre l'autre.

Avantageusement, le levier 54 à came est muni d'un organe 61 de verrouillage en position fermée qui permet d'éviter son ouverture accidentelle.

L'organe 61 de verrouillage est ici formé par un poussoir à ressort à bille 63 qui est ici porté par le mors 44A et dont une bille est destinée à être reçu élastiquement dans un cran 65 agencé à l'extrémité libre du levier 54 à came en position fermée. Cela oblige ainsi à produire un effort pour pouvoir désengager la bille du cran pour faire pivoter le levier 54 à came vers sa position ouverte.

En variante, l'organe de verrouillage peut être formé par une goupille axiale qui est reçu dans deux orifices appartenant respectivement au mors 44A et à l'extrémité libre du levier 54 à came, les deux orifices étant en coïncidence en position fermée du levier 54 à came. Il est ainsi nécessaire de retirer la goupille pour faire pivoter le levier 54 à came vers sa position ouverte.

L'écrou 56 de réglage permet d'ajuster la précharge du système afin de garantir un serrage optimal de l'embout 38 de tuyère.

En variante non représentée de l'invention, l'organe de fermeture peut être remplacé par une simple vis filetée présentant une tête de vis et recevant, à son extrémité opposée un écrou de serrage permettant ainsi d'obtenir l'effet de serrage recherché. Bien qu'un tel mode de réalisation ne permette pas un démontage aussi rapide que le mode de réalisation représenté aux figures, un tel mode de réalisation entre dans la portée de l'invention. En outre, la fixation de l'embout de tuyère au moyen d'un tel organe de fermeture demeure plus rapide que la fixation par des vis axiales selon l'état de la technique.

Selon une autre variante non représentée de l'invention, l'organe de fixation comporte deux mors totalement indépendants l'un de l'autre qui sont fixés ensemble par deux vis de serrage. Bien qu'un tel mode de réalisation ne permette pas un démontage aussi rapide que le mode de réalisation représenté aux figures, un tel mode de réalisation entre dans la portée de l'invention. En outre, la fixation de l'embout de tuyère au moyen d'un tel organe de fermeture demeure plus rapide que la fixation par des vis axiales selon l'état de la technique.

Quel que soit le mode de réalisation choisi pour le collier de serrage, les mors 44A, 44B, l'embout 38 de tuyère et le support 32 présentent des éléments permettant de convertir le serrage radial des mors 44A, 44B autour de l'embout 38 de tuyère en serrage axial de l'embout 38 de tuyère contre le support 32.

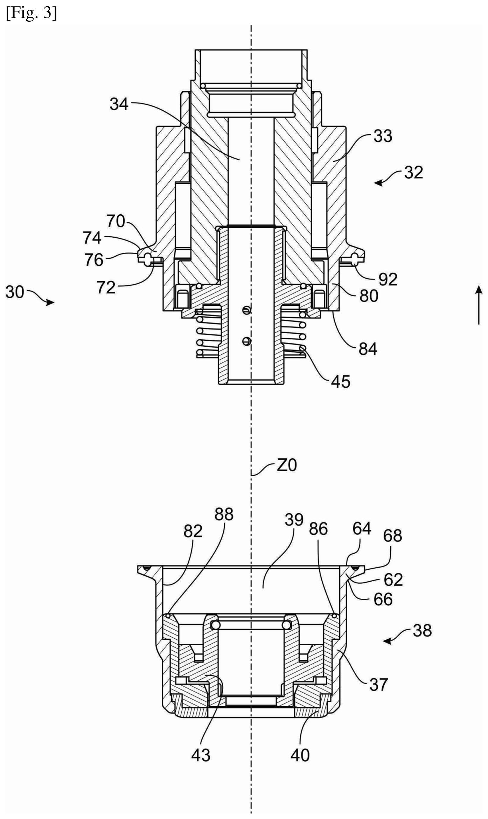

Pour permettre le serrage axial de l'embout 38 contre le support 32, l'embout 38 de tuyère comporte un premier collet 62 annulaire. Le premier collet 62 annulaire s'étend radialement en saillie par rapport au corps de l'embout 38 de tuyère. Le premier collet 62 est ici agencé à une extrémité supérieure de l'embout 38. Le premier collet 62 présente une face 64 d'appui supérieure qui s'étend dans un plan orthogonal à l'axe « Z0 » de la tuyère. La face 64 d'appui est plane. Le premier collet 62 présente aussi une face 66 de portée opposée à sa face 64 d'appui. La face 66 de portée est ainsi tournée vers le bas. La face 66 de portée présente une forme tronconique. Ainsi, en coupe axiale, comme représenté aux figures 3, 5 et 7, la face 66 de portée est inclinée par rapport à l'axe « Z0 » de la tuyère 30. Le premier collet 62 est aussi délimité vers l'extérieur par un bord 68 périphérique.

Le support 32 comporte un deuxième collet 70 annulaire. Le deuxième collet 70 annulaire s'étend radialement en saillie par rapport au corps du support 32. Le deuxième collet 70 est ici agencé à proximité d'une extrémité inférieure du support 32. Le deuxième collet 70 présente une face 72 d'appui inférieure qui s'étend dans un plan orthogonal à l'axe « Z0 » de la tuyère. La face 72 d'appui est plane. Le deuxième collet 70 présente aussi une face 74 de portée opposée à sa face 72 d'appui. La face 74 de portée est ainsi tournée vers le haut. La face 74 de portée présente une forme tronconique. Ainsi, en coupe axiale, comme représenté aux figures 3, 5 et 7, la face 74 de portée est inclinée par rapport à l'axe « Z0 » de la tuyère 30. Le deuxième collet 70 est aussi délimité vers l'extérieur par un bord 76 périphérique.

Les deux collets 62, 70 présentent le même diamètre externe. Ainsi leurs bords 68, 76 périphériques sont alignés axialement lorsque l'embout 38 est monté sur le support 32.

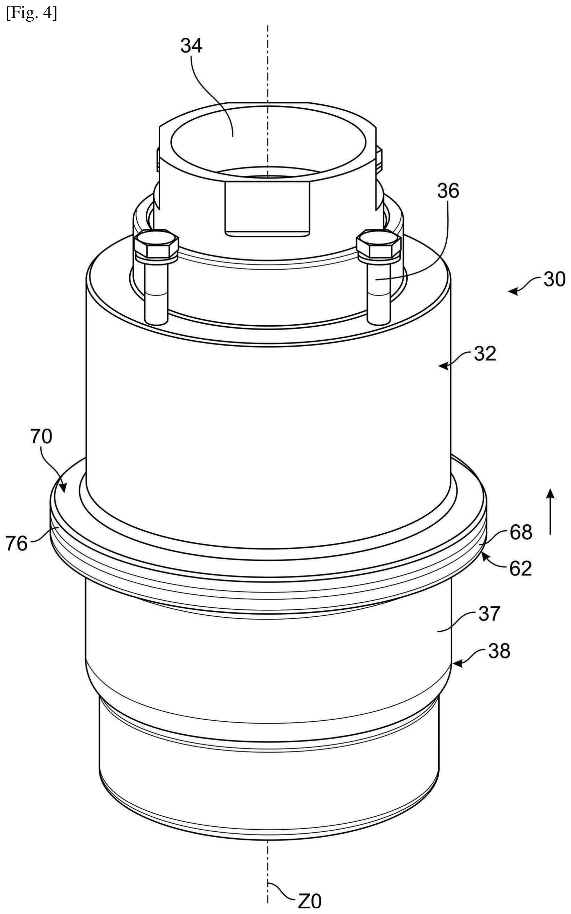

En outre, les collets 62, 70 présentent ici une forme symétrique par rapport à leur plan de joint orthogonal à l'axe « Z0 » de la tuyère 30 lorsque l'embout 38 est monté sur le support 32, comme représenté aux figures 4 à 7.

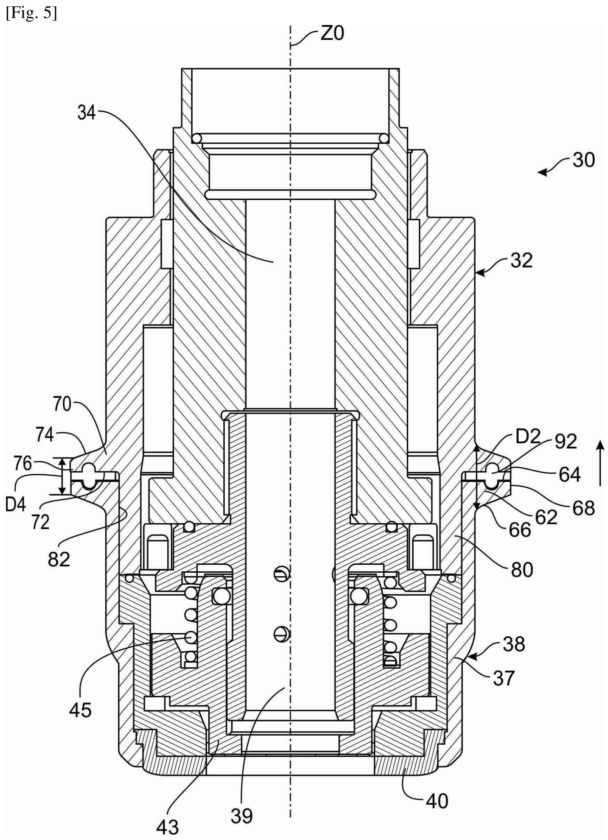

Lorsque l'embout 38 de tuyère est monté sur le support 32, il est amené axialement en coïncidence avec le support 32, au-dessous du support 32 comme cela est représenté aux [Fig.2] et 3. Puis l'embout 38 de tuyère est appuyé axialement contre le support 32 de manière que la face 64 d'appui du premier collet 62 soit axialement en vis-à-vis contre la face 72 d'appui en vis-à-vis du deuxième collet 70 annulaire, comme représenté aux figures 4 et 5.

Le collier 44 de serrage de l'organe 42 de fixation est destiné à enserrer radialement les bords des deux collets 62, 70 en les chevauchant.

Pour faciliter le positionnement, et notamment le centrage, de l'embout 38 par rapport au support 32, le support 32 présente un manchon 80 de centrage qui s'étend axialement en saillie, ici vers le bas, depuis la face 72 d'appui du deuxième collet 70. Comme représenté à la [Fig.5], le manchon 80 de centrage est emboîté axialement dans un passage 82 central de l'embout 38 lors du montage. Le manchon 80 de centrage est reçu avec un jeu radial juste suffisant pour permettre son coulissement dans le passage 82 central tout en garantissant un bon centrage.

Une extrémité 84 libre du manchon 80 de centrage est reçue en butée axiale contre un épaulement 86 interne de l'embout 38. L'épaulement 86 est ici porté par une pièce annulaire qui est reçu dans un corps de l'embout 38 et qui est destinée à être serrée axialement entre le corps de l'embout 38 et le manchon 80 de centrage.

Pour garantir le contact entre l'extrémité 84 libre du manchon 80 de centrage et l'épaulement 86, un jeu axial est avantageusement réservé entre les faces 64, 72 d'appui des deux collets 62, 70 lorsque l'embout 38 est monté sur le support 32.

Un joint 88 d'étanchéité est avantageusement prévu entre l'extrémité 84 libre du manchon 80 de centrage et l'épaulement 86 pour empêcher l'air de soufflage de fuir.

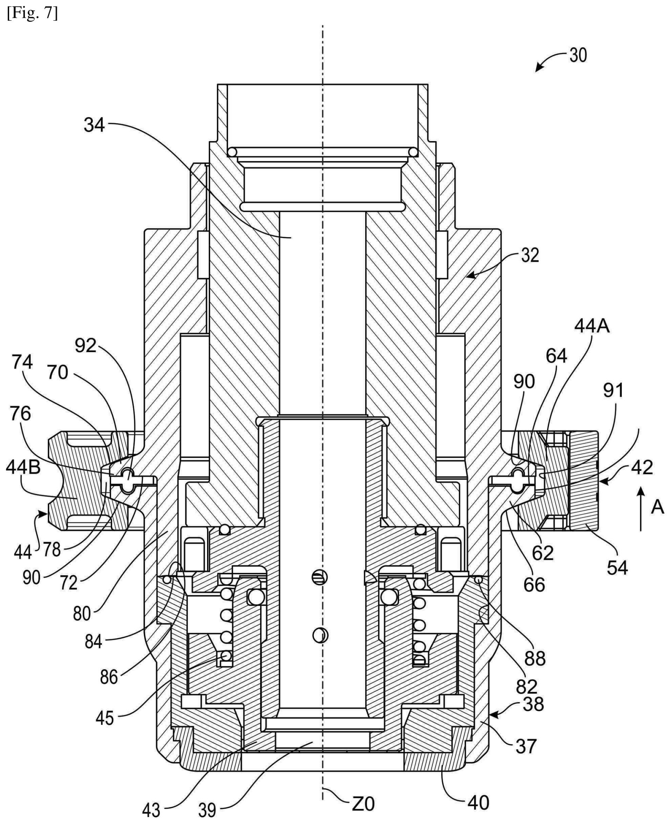

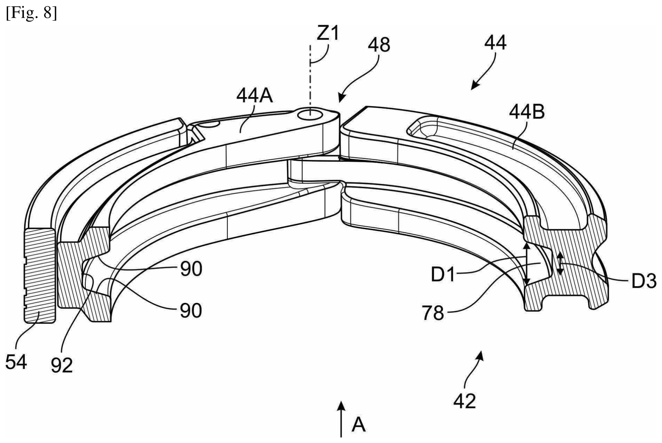

En outre, comme représenté aux figures 7 et 8, le collier 44 de serrage de l'organe 42 de fixation comporte une gorge 78 interne de réception des deux bords des collets assemblés. La gorge 78 est réalisée dans une face interne de chacun des mors 44A, 44B.

La gorge 78 interne est délimitée axialement par deux parois 90 latérales inclinées de manière divergente de l'extérieur vers l'intérieur. Chaque paroi 90 latérale présente la même inclinaison qu'une face 66, 74 de portée associée.

La gorge 78 est aussi délimitée radialement vers l'extérieur par un fond 91.

Le collier 44 est destiné à être en contact avec le support 32 et l'embout 38 uniquement par l'intermédiaire des parois 90 latérales avec les faces 66, 74 de portée.

A cet effet, il est préférable qu'un jeu radial soit réservé entre le fond 91 de gorge 78 et les collets 62, 70 lorsque le collier 44 est serré.

A titre d'exemple non limitatif, la dimension « D1 » axiale de l'ouverture interne de la gorge 78 est inférieure à la dimension « D2 » axiale de l'épaisseur axiale cumulée des deux collet 62, 70 au niveau de leur jonction avec le corps de l'embout 38, pour le premier, et avec le corps du support 32 pour le deuxième. De plus, la dimension « D3 » axiale du fond 91 de la gorge 78 est inférieure à la dimension « D4 » axiale de l'épaisseur cumulée des bords 68, 76 des deux collets 62, 70.

Ainsi, chaque collet 62, 70 comporte une face 66, 74 de portée opposée à sa face 64, 72 d'appui, chaque face 66, 74 de portée tronconique coopérant avec une paroi 90 latérale inclinée de la gorge 78 pour comprimer axialement les deux faces 64, 72 d'appui l'une contre l'autre lorsque les mors 44A, 44B sont serrés radialement autour des collets 62, 70.

Pour permettre d'obtenir une meilleure fixation, il est prévu d'interposer un joint 92 de réaction annulaire élastique entre les deux faces 64, 72 d'appui avant leur serrage. Le joint 92 de réaction est par exemple reçu dans une rainure annulaire d'au moins l'une des deux faces 64, 72 d'appui. Cela permet de procurer un effet de serrage supplémentaire des faces 66, 74 de portée contre les parois 90 latérales de la gorge 78. Cela permet aussi de répartir équitablement l'effort axial de serrage de l'embout 38 contre le support 32 sur toute la circonférence des collets 62, 70. Cela permet en outre de garantir que le contact entre l'embout 38 et le support 32 se fasse correctement au niveau de l'extrémité 84 libre du manchon 80 et l'épaulement 86 de l'embout 38.

L'invention permet ainsi un positionnement optimal de l'embout 38 sur le support 32 qui est obtenu de manière simple et peu onéreuse du fait du nombre limité d'éléments intervenant dans ce positionnement.

En outre, l'utilisation d'un tel organe 42 de fixation permet de remplacer rapidement et facilement un embout 38, ce qui permet de réduire le temps d'arrêt de l'installation de fabrication lors d'un changement de dimension des préformes traitées.

## Revendications

1. Tuyère (30) pour le formage de récipients en matériau
thermoplastique par injection d'un fluide sous pression dans une préforme (12), la tuyère (30) comportant :
- un support (32) qui est muni d'une conduite (34) d'arrivée de fluide sous pression ;
- un embout (38) de tuyère tubulaire distinct du support (32) qui est destiné à être monté sur le support (32) pour prolonger la conduite (34) d'arrivée et qui comporte un joint (40) de soufflage pour le raccordement étanche de son extrémité libre avec une préforme (12) ;
- un organe (42) de fixation pour la fixation amovible de l'embout (38) sur le support (32) ;
**caractérisé en ce que** l'organe (42) de fixation comporte un collier (44) de serrage.

2. Tuyère (30) selon la revendication précédente, **caractérisée en ce que** l'embout (38) de tuyère comporte un premier collet (62) annulaire et le support (32) comporte un deuxième collet (70) annulaire dont une face (72) d'appui est destinée à venir axialement en butée contre une face (64) d'appui en vis-à-vis du premier collet (62) annulaire lorsque l'embout (38) de tuyère est monté sur le support (32), le collier (44) de serrage enserrant des bords (68, 76) des deux collets (62, 70).

3. Tuyère (30) selon la revendication précédente, **caractérisée en ce que** le collier (44) de serrage comporte une gorge (78) interne de réception des collets (62, 70) assemblés.

4. Tuyère (30) selon la revendication précédente, **caractérisée en ce que** chaque collet (62, 70) comporte une face (66, 74) de portée opposée à sa face (64, 72) d'appui, la face (66, 74) de portée présentant une forme tronconique coopérant avec une paroi (90) latérale inclinée de la gorge (78) pour comprimer axialement les deux faces (64, 72) d'appui l'une contre l'autre lorsque le collier (44) est serré radialement autour des collets (62, 70).

5. Tuyère (30) selon la revendication précédente, **caractérisée en ce qu'**un joint (92) de réaction annulaire élastique est interposé entre les deux faces (64, 72) d'appui.

6. Tuyère (30) selon la revendication précédente, **caractérisée en ce que** le joint (92) de réaction est reçu dans une rainure annulaire d'au moins l'une des deux faces (64, 72) d'appui.

7. Tuyère (30) selon l'une quelconque des revendications précédentes, **caractérisée en ce que** le support (32) présente un manchon (80) de centrage qui s'étend axialement en saillie depuis la face (72) d'appui du deuxième collet (70), le manchon (80) de centrage étant emboîté axialement dans un passage (39) central de l'embout (38) lors du montage.

8. Tuyère (30) selon la revendication précédente, **caractérisée en ce qu'**une extrémité (84) libre du manchon (80) de centrage est reçue en butée axiale contre un épaulement (86) interne de l'embout (38).

9. Tuyère (30) selon la revendication précédente, **caractérisée en ce qu'**un joint (88) annulaire d'étanchéité est intercalé entre l'épaulement (86) et l'extrémité (84) libre du manchon (80) lorsque l'embout (38) est monté sur le support (32).

10. Tuyère (30) selon l'une quelconque des revendications précédentes, **caractérisée en ce que** le collier (44) de serrage comporte au moins deux mors (44A, 44B) serrés l'un contre l'autre par au moins un organe (46) de fermeture.

11. Tuyère (30) selon la revendication précédente, **caractérisée en ce que** les mors (44A, 44B) sont articulés l'un à l'autre par une charnière (48) agencée à une première extrémité des mors (44A, 44B), l'organe (46) de fermeture étant agencé à l'autre extrémité des mors (44A, 44B).

12. Tuyère (30) selon l'une quelconque des revendications 10 ou 11, **caractérisée en ce que** l'au moins un organe (46) de fermeture comporte une tige (50) de traction qui est reçue dans des orifices (52) aux extrémités libres des mors (44A, 44B) pour tirer les mors (44A, 44B) l'un vers l'autre.

13. Tuyère (30) selon la revendication précédente, **caractérisée en ce que** l'organe (46) de fixation comporte un levier (54) à came qui tire la tige (50) lorsqu'il est rabattu contre le mors (44A).

14. Embout (38) de tuyère présentant un axe principal (Z0) pour une tuyère (30) selon l'une quelconque des revendications 4 à 13, **caractérisé en ce qu'**il comporte :
- un joint (40) de soufflage pour le raccordement étanche de son extrémité libre avec une préforme (12) ;
- un premier collet (62) annulaire agencé à une extrémité supérieure de l'embout (38) et présentant une face (64) d'appui et une face (66) de portée opposée, la face (66) de portée présentant une forme tronconique, tandis que la face (64) d'appui est orthogonale à l'axe (Z0).

15. Support (32) de tuyère présentant un axe principal (Z0) pour une tuyère (30) selon l'une quelconque des revendications 7 à 13, **caractérisé en ce qu'**il comporte :
- un deuxième collet (70) annulaire présentant une face (72) d'appui et une face (74) de portée opposée, la face (74) de portée présentant une forme tronconique, tandis que la face (72) d'appui est orthogonale à l'axe (Z0) ;
- un manchon (80) de centrage qui s'étend axialement en saillie depuis la face (72) d'appui du deuxième collet (70).
